# EUROPEAN PATENT APPLICATION

(11) **EP 2 600 161 A1**
(43) Date of publication of application: **05.06.2013**
(21) Application number: 12194342.7
(22) Date of filing: 27.11.2012
(51) Int. Cl.: G01P 21/02

(54) **Speedometer Calibration**

(30) Priority: 29.11.2011 GB 201120514
(71) Applicant: Nissan Motor Manufacturing (UK) Ltd., Cranfield Bedfordshire MK43 0DB (GB)
(72) Inventor: Keenan, Patrick, Cranfield, Bedfordshire MK430DB (GB)

(57) **Abstract**

An method and apparatus for calibrating and/or synchronising a vehicle speedometer 25 comprising measuring wheel speed 5 and using a global position system (GPS) 20 and means to determine vehicle speed from a GPS signal, wherein a calibration module determines if measurement quality threshold conditions have been met and that the speedometer should be calibrated, and applies a calibration factor to the speedometer display based on the measured wheel speed and the vehicle speed from a GPS signal.

## Description

### Field of the Invention

The present invention relates to vehicle speedometers, in particular to a method of calibrating vehicle speedometers using a GPS signal. The invention also relates to an apparatus for calibrating speedometers using a GPS signal.

### Background of the Invention

Modern speedometers use sensors to send signals corresponding to the rotational speed of the driveshaft or wheels, and therefore the vehicle's speed. The sensor can be an existing anti-lock braking (ABS) sensor that measures wheel speed. An ABS control unit continuously measures vehicle wheel speed by measuring and averaging the input from wheel speed sensors. The vehicle speed is derived from the vehicle wheel speed measurement and is based on a fixed rolling radius of the wheel/tyre. The speedometer, which may be contained within a cluster of gauges such as a combimeter, displays the vehicle speed to an accuracy defined by regulatory/homologation requirements.

Such speedometer systems are liable to errors and discrepancies. For example, as the rolling radius of a tyre changes, the accuracy of the vehicle speed also changes. Rolling radius can change due to tyre wear, tyre pressure change, and fitting different size tyres. Furthermore, in some territories, it is necessary to fit winter tyres, which differ in size from regular tyres.

A GPS signal can be used to measure vehicle speed but is also subject to errors and discrepancies. For example, poor signal reception caused by location and atmospheric conditions will affect speed calculation quality. GPS is also less reliable at lower speeds due to errors in change of position.

It is desirable to provide accurate speed readings for vehicles, and to calibrate speedometers to account for measurement errors and discrepancies.

It is possible to calibrate a speedometer by monitoring a vehicle's speedometer input and comparing it against another source of speed calculation, then applying an offset to the speedometer to correct for any detected errors. Speed can be measured, for example, using the time taken to travel a known distance, or checking against a GPS speed reading. Such methods can be difficult and time consuming to implement, and cannot be used to automatically provide calibration or synchronisation between the different speed measurement sources. Additionally, comparing instantaneous speeds between wheel derived speed and GPS speed can be misleading depending on the details of when the measurements are taken.

Speedometers should also comply with appropriate government regulations and homologation requirements. A typical homologation requirement is that the indicated speed must not be more than 110 percent of the true speed plus 4km/h at specified test speeds. Typical test speeds are 40 km/h, 80 km/h and 120 km/h.

Accordingly, it is an object of the invention to provide a method of calibrating and/or synchronising a vehicle speedometer using a GPS signal to reduce inaccuracies in the displayed vehicle speed due to tyre variations and other errors.

It is a further object of the invention to provide a speedometer calibration and/or synchronisation method that will adhere to regulatory/homologation requirements.

### Summary of the Invention

According to the present invention there is provided a method and apparatus as claimed in the independent claims.

The method and apparatus advantageously allows for correction of errors in a speedometer and prevents erratic calibration and synchronisation. The speedometer will only be calibrated or synchronised when measurement quality criteria are satisfied. The method discards any speed readings that might lead to inaccurate or unsafe calibration. For example, speed will not be measured and used when the vehicle is stationary, cornering, out of control, going too slowly/quickly, or in a poor GPS reception area. These preventative steps ensure calibration quality.

A minimum logging distance to record speeds is also required to ensure that the error in the speed values does not exceed the proportional difference between GPS and wheel rolling radius derived speeds.

Additionally, the invention advantageously provides a method and apparatus that ensures the quality of the calibration process is not adversely affected by erroneous measurements or conditions that would also otherwise adversely affect the quality of the calibration, ensuring that the speedometer reading is accurate as possible. The calibration process advantageously provides a methodology that complies with regulatory/homologation requirements.

Further, the system provides tuneable parameters that allow the method to be tuned to adjust the sensitivity of the method to errors, and other factors, thus improving calibration quality and flexibility.

The present invention will now be described, by way of example only, with reference to the accompanying drawings, in which:
Figure 1 illustrates a system for calibrating and/or synchronising a vehicle speedometer in accordance with an embodiment of the invention;
Figure 2 is a flow chart showing a method of calibrating a vehicle speedometer in accordance with an embodiment of the invention;
Figure 3 is flow chart showing a stage in a method of calibrating a vehicle speedometer in accordance with an embodiment of the invention;
Figure 4 is flow chart showing a further stage in a method of calibrating a vehicle speedometer in accordance with an embodiment of the invention;

In the drawings, like parts are denoted by like reference numerals.

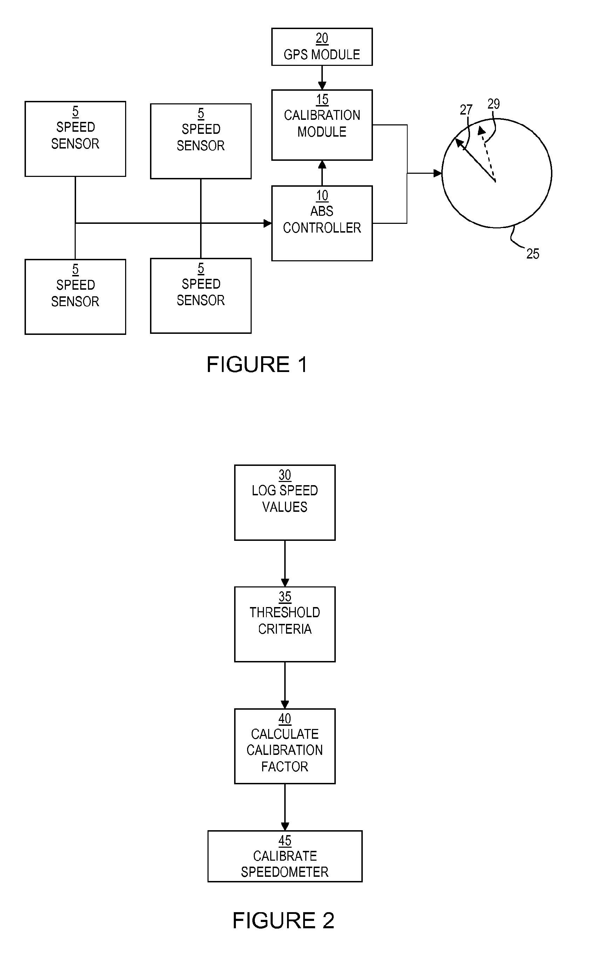

Figure 1 illustrates a system for calibrating and/or synchronising a vehicle speedometer in accordance with an embodiment of the invention.

Figure 1 illustrates components in a system installed in a vehicle that displays vehicle speed measured by conventional means such as measuring wheel or axle speed, and further allows a speedometer to be calibrated with GPS derived speed measurements.

There are shown wheel speed sensors 5, anti-lock brake (ABS) controller 10, calibration module 15, Global Positioning System (GPS) module 20, and speedometer 25. In the example shown, the speedometer shows the case of a speed derived from the wheel speed sensors, (solid arrow 27) and, for comparison, a speed from the GPS module (dashed arrow 29). In the example shown, the ABS controller 10 and the GPS module 20 are connected to the calibration module 15.

In the example shown, the wheel speed sensors are the same used for anti-lock brake (ABS) systems. The wheel speed sensors 5 measure the individual speed of each wheel and send the speed measurement to the ABS controller 10. The ABS unit can output an averaged wheel speed to be displayed by the speedometer 25.

The ABS control unit 10 continuously measures vehicle wheel speed by measuring and averaging the input from the wheel speed sensors 5. The vehicle speed is derived from the vehicle wheel speed measurement and is based on a fixed rolling radius of the wheel/tyre. The speedometer, which may be contained within a combimeter with a cluster of gauges, displays the vehicle's speed to an accuracy defined by, for example, homologation requirements.

The GPS module 20 can also be used as speedometer, using the GPS signal to calculate speed based on how far the receiver has moved since a previous measurement.

The calibration module analyses inputs from the GPS module 20 and the ABS controller 10. The calibration module adjusts the speedometer if predetermined criteria are satisfied. The vehicle speed can be calibrated to improve accuracy and/or account for errors and discrepancies in the speed as measured by wheel speed sensors 5, and/or the GPS module 20.

The calibration module 15 can comprise a number of other sub-units and inputs and outputs that enable it to function. For, example, it can communicate with other vehicle sub-systems to detect what the current driving angle is, or other additional data. The calibration module can also be contained within a combimeter.

Other types of speed sensor can be used to measure wheel speed and act as inputs into the calibration module, for example, other mechanical or electronic based sensors, mounted on the wheel or driveshaft.

Figure 2 is a flow chart showing the basic steps in a method of calibrating a vehicle speedometer.

The first step 30 is to measure the average wheel speed and the average GPS speed over a minimum distance. A log of these measurements is stored.

The second step 35 confirms that the measured speeds meet the required quality threshold criteria. Speed measurements that do not meet the criteria are discarded.

The third step 40 is to analyse at least one speed log to calculate a suitable calibration factor.

The fourth step 45 is to apply the calibration factor to the speedometer, and display the calibrated speed.

In use, the calibration of the speedometer can be initiated manually or can be carried out automatically. Automatic calibration can be initiated upon satisfying pre-set conditions.

The calibration can be carried out on a constant or periodic basis to keep the speedometer synchronised to a GPS calibrated signal.

The quality threshold criteria for completing the calibration process can be selected from a range of possible quality parameters. These parameters can be selected and threshold values chosen to tune the sensitivity of the process. The tuning of parameters can be factor set or chosen by the end-user. These criteria prevent from being recorded and ensure that the speedometer stays within homologation.

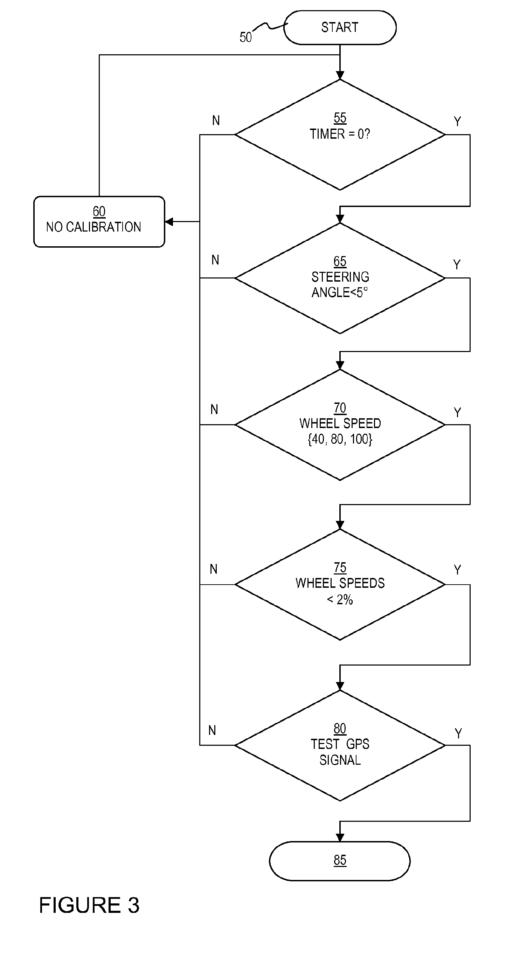

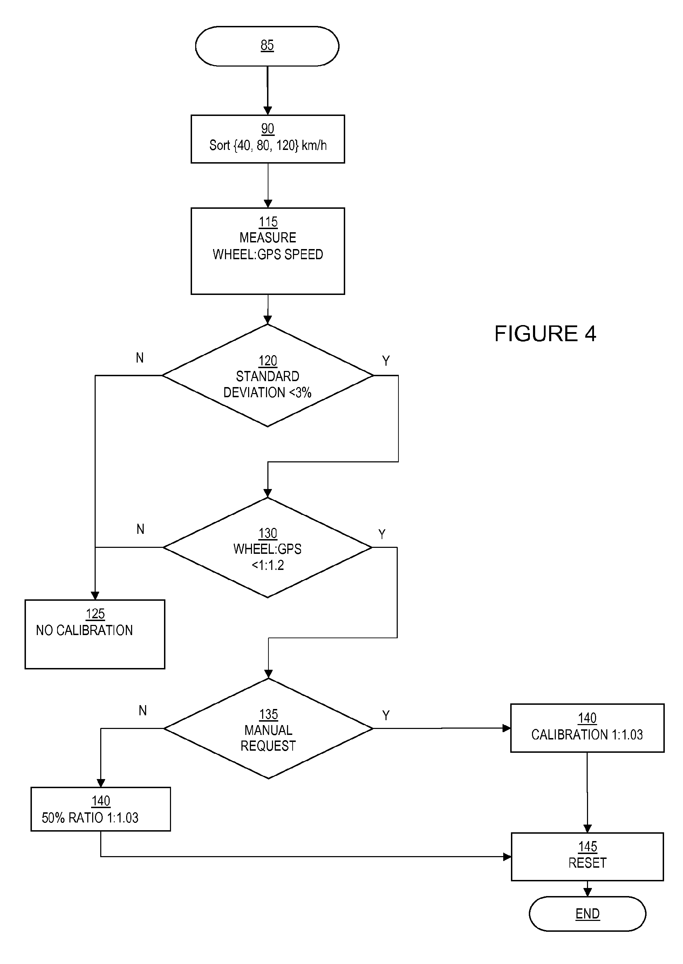

Figures 3 and 4 illustrate the calibration process in more detail.

Figure 3 is a flow chart showing a first stage in a method of calibrating and/or synchronising a vehicle speedometer. In particular the process shown in

Figure 3 defines the frequency and quality conditions required to decide when it is appropriate to log speed measurements. If the vehicle is stationary, cornering, out of control, going too slowly/quickly, or in a poor GPS reception area then a log should not be taken. Using such adjustable quality control conditions improves the accuracy and reliability of calibration/synchronisation. A timer can be used to decide how often speed measurements should be made.

The process is initiated (step 50). The initiation step can include setting a timer condition to decide how often the calibration process is done.

For example, it may be desired to check the speedometer for calibration once every hour. The frequency can be increased to effectively keep the speedometer in synchrony with the GPS system.

The timer is checked (step 55) and if the timer has reached zero then the calibration process begins, otherwise wheel speed is not recorded and there is no speedometer calibration. The process returns to step 55 as the timer continues to countdown. Of course, other alternative schemes to handle the timing of the calibration process are possible. Additionally, the process can be initiated manually. Manual initialisation can be distinct from or supplementary to automatic timing of the calibration process.

The calibration unit checks the current steering angle of the vehicle (step 65). The wheel speed is not recorded if the steering angle is more than 5°. High steering angles indicate cornering or more extreme manoeuvres, which are conditions when wheel speed cannot be reliably recorded.

If the steering angle condition is satisfied then the average wheel speed is measured and checked if it matches one of a set of predetermined speeds (step 70), plus or minus an error margin, shown here as ±2kph. Three wheel speeds (40 km/h, 80 km/h, and 120 km/h) are shown in this example. These three speeds are chosen in this example because they correspond to the speeds typically used in homologation regulations for speedometers. Of course, other speeds could be used, and fewer or more categories could be used.

If the measured average wheel speed does not match any of the the set of predetermined speeds, then the wheel speed value is not recorded and there is no speedometer calibration.

If the measured average wheel speed matches one of the speeds then the individual wheel speeds are checked and compared (step 75). If the difference between individual wheels speeds is more than a chosen percentage, in this example, 2%, then the average wheel speed value is not recorded and there is no speedometer calibration. This step ensures that no calibration takes place during conditions when wheel speed cannot be reliably recorded, for example, when there is wheel spinning, a broken/faulty sensor, or a flat tyre.

If the measured wheel speed is acceptable then the quality of the GPS signal received by the GPS module 20 is checked (step 80). Different parameters can be used to gauge the quality of the GPs signal. For example, the number of satellites the module is locked on to can be used. Other formats of Received Signal Strength Indication can also be used.

GPS quality can be affected by several factors such as atmospheric conditions, line of sight with the satellite constellation, multi-path effects, and the like. This step ensures that the GPS speed measurement is not adversely affected, for example by signal dropout. If the GPS signal does not meet the required quality criteria, then no speed values are recorded and there is no calibration.

If the GPS signal quality is satisfactory, then the wheel speed and the GPS speed are recorded in the appropriate speed log. Each individual wheel speed or the average wheel speed may be recorded.

Figure 4 is flow chart showing a further stage in a method of calibrating a vehicle speedometer. In particular, Figure 4 defines a process to determine the calibration factor applied to the speedometer.

The wheel speeds are checked, sorted and recorded in different logs according to speed (step 90). In this example there are three logs corresponding to each wheel speed category, one for 40km/h, one for 80km/h, and one for 120km/h.

The log is kept as a stack, where older logged entries are continuously replaced with newer ones to ensure the latest speeds are considered. The number of logged entries will influence the quality of the synchronisation amount.

After the wheel speed has been logged in the appropriate category (90), the ratio of the wheel speed:GPS speed is measured (step 115). The ratio of the wheel speed:GPS speed is ideally similar for all logged measurements.

The standard deviation of the ratios is be used to ensure calibration quality. For each of the three logs, the standard deviation of the wheel speed: GPS speed ratio is calculated (step 120). If the standard deviation is greater than a predetermined quality threshold, in this example 3%, then there is no calibration.

Each log comprises a record of speed measurements as set forth above. The number of entries can be varied. Recording logs of the wheel speed values enables statistical analysis of the wheel speeds, and to determine if there is any statistically significant variation occurring. Some variation in wheel speed might be expected but if there is a continuing error, then this can be detected and accounted for by calibrating the speedometer. The number of entries in the log and the frequency the log is updated will influence the behaviour of the calibration process.

For example, a log with a small number of entries that is frequently updated with new entries will be sensitive to deviance away from the category speed, i.e. the absolute difference between the recorded average wheel speed away from the logged speeds for that speed category (40km/h, 80km/h, or 120 km/h).

A large log that is not updated frequently will be less sensitive to changes. It will take longer and more entries to detect the need for the speedometer to be calibrated.

The more sensitive the process is to deviation away from the category speed, then the more prone the system is to erroneous outliers. A less sensitive log, on the other hand, could take longer to recognise an error. The present method advantageously allows for tuning of the parameters to change the sensitivity of the process.

An example of one the advantages of being able to tune the sensitivity of the system would be to detect changes in tyre conditions. For example, customers would expect changes arising from changing to snow tyres be detected quickly (say, within one hour) so a large log may not provide enough information to provide stimulate a calibration in a short time scale.

In another example, high speed or frequent braking can cause tyres to heat up, which affects inflation and therefore rolling radius. A small log may permit changes due to the effects of tyre heating which is undesirable.

Once the standard deviation is checked, then the average wheel speed:GPS speed ratio is checked (step 130). This step ensures that calibration does not mask equipment failure, for example broken wheel speed sensors. If the average wheel speed:GPS speed is greater than a predetermined amount, then this indicates that there may be a fault in the vehicle. An adjustment limit can be applied (e.g. 20% difference between wheel and GPS speeds). If this is exceeded the speedometer can be reset to default setting, e.g. factory settings.

If the ratio is higher than the predetermined limit, here shown as 1:1.2 then no calibration is carried out (step 125).

Next, a check is made to see what type of request initiated the calibration process. The request may be made manually, or automatically.

An automatic request will set the calibration factor at 1:1.03, but the actual calibration applied (step 140) is a fraction of the full factor, in this example 50% of the 1:1.03. By setting the synchronisation level to a fraction of the ratio, synchronisation is continuous and proportional. This methodology allows the speedometer to gradually synchronise with the calibrated speed. This approach advantageously avoids the speedometer display jumping around during automatic calibration.

A manual request sets the calibration ratio at 1:1.03 and the speedometer is calibrated (step 165). The display will now read the calibrated speed derived from the measured wheel speed, and the GPS derived speed.

Once the speedometer has been calibrated, the system can be reset (step 145). For example, the timer and other parameters can be reset. Once the calibration/synchronisation is completed, the logs are cleared. Re-using the logs can create errors.

Logging may be continuous but synchronisation actions can be timed. For example, the timer could be set to expire when ignition is switched off or after one hour of driving or once per week.

The quality checks ensure that errors in measurement do not stack up to take the displayed speed out of homologation regulations. Homologation requires a speedometer accuracy of ±10% +4km/h. Setting the synchronising ratio to, for example, +3% meets homologation requirements.

The calibration factor is chosen to so that the speedometer stays within homologation standards. This parameter can be changed to suit end user requirements. Any of the parameters defining quality criteria can be adjusted to tune the calibration process. For example the parameters can be factory set, or alternatively the parameters can be or customised by an end user depending upon requirements and desires. The tuneable parameters introduce a high degree of flexibility to the calibration method.

## Claims

1. A method for calibrating a vehicle speedometer comprising the steps of:
a) Determining a first speed value for a vehicle from the vehicle's wheel speed;
b) Determining a second speed value for the vehicle using a GPS signal;
c) Determining if at least one threshold condition has been met;
d) Discarding speed values that do not meet the said threshold condition and recording speed values that meet the said threshold condition;
e) Determining a calibration factor based upon the recorded speed values; and
f) Applying a calibration factor to a vehicle speedometer.

2. A method according to claim 1 wherein the first and second speed values are logged over a minimum distance.

3. A method according to claim 1 or 2 wherein average wheel speed value is measured using ABS sensors.

4. A method according to any preceding claim wherein the second speed value is recorded using a satellite navigation unit.

5. A method according to any preceding claim wherein the threshold condition is determined by the vehicle steering angle.

6. A method according to any preceding claim wherein the threshold condition is additionally determined by testing if the wheel speed belongs to a predetermined set of vehicle speed values.

7. A method according to any claim 6 wherein the predetermined set of vehicle speed values is 40km, 80km and 120km.

8. A method according to any preceding claim wherein the threshold condition is additionally determined by the difference between the speeds of each wheel.

9. A method according to any preceding claim wherein the threshold condition is determined by the quality of the GPS signal.

10. A method according to any preceding claim wherein the recorded speed is stored in a log of speed measurements.

11. A method according to claim 10 wherein the number of measurements in the logs can be varied.

12. A method according to any preceding claim wherein the calibration factor is determined according to a second threshold condition.

13. A method according to claim 12 wherein the second threshold condition includes the standard deviation of the ratio of wheel speed to GPS for at least one of the logs of the recorded speed values.

14. A method according to claim 13 wherein the second threshold condition includes determining the ratio of wheel to GPS speeds

15. A method as claimed in any preceding claim wherein the calibration factor is set to meet known regulatory standards.

16. A method according to any of claims 1 to 14 wherein the calibration factor is 1:1.03.

17. A method as claimed in any preceding claim wherein a fraction of the calibration factor is applied.

18. A method according to any preceding claim wherein the calibration steps are applied periodically to synchronise the speedometer with the GPS speed measurement.

19. An apparatus for calibrating a vehicle speedometer comprising:
Wheel speed measurement sensors to measure wheel speeds of the vehicle;
A global position system (GPS) receiver and means to determine vehicle speed from a GPS signal;
A calibration module for calculating a calibration factor based on the measured wheel speed and the vehicle speed from a GPS signal;
Means for applying the calibration factor to a speedometer.

20. An apparatus as claimed in claim 19 further comprising wheel speed measurement sensors to measure wheel speeds of the vehicle.

21. An apparatus as claimed in claim 20 further comprising wheel speed measurement sensors to measure wheel speeds of the vehicle.

22. An apparatus as claimed in claim 21 further comprising a global position system (GPS) receiver and means to determine vehicle speed from a GPS signal.

23. A method for calibrating a speedometer substantially as hereinbefore described and with reference to the drawings.

24. An apparatus for calibrating a speedometer substantially as hereinbefore described and with reference to the drawings.
